(19) Europäisches Patentamt
European Patent Office
Office européen des brevets

(11) **EP 2 425 522 B1**

(12) **EUROPÄISCHE PATENTSCHRIFT**

(45) Veröffentlichungstag und Bekanntmachung des Hinweises auf die Patenterteilung:
**26.12.2018 Patentblatt 2018/52**

(51) Int Cl.:
*H02M 7/483* *(2007.01)*       *H02M 1/00* *(2006.01)*
*H02M 1/084* *(2006.01)*       *H02M 7/5387* *(2007.01)*

(21) Anmeldenummer: **10714235.8**

(22) Anmeldetag: **08.04.2010**

(86) Internationale Anmeldenummer:
**PCT/EP2010/054641**

(87) Internationale Veröffentlichungsnummer:
**WO 2010/133398 (25.11.2010 Gazette 2010/47)**

(54) **VERFAHREN ZUM REGELN EINES UMRICHTERS UNTER BERÜCKSICHTIGUNG VON STELL- UND MESSVERZÖGERUNGEN MIT HILFE EINES BEOBACHTERS**

METHOD FOR CONTROLLING AN INVERTER UNDER CONSIDERATION OF ACTUATING AND MEASUREMENT DELAYS BY MEANS OF AN OBSERVER

PROCÉDÉ DE RÉGULATION D'UN CONVERTISSEUR, TENANT COMPTE DE LA TEMPORISATION DU RÉGLAGE ET DE LA MESURE, À L'AIDE D'UN OBSERVATEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.04.2009 DE 102009019298**

(43) Veröffentlichungstag der Anmeldung:
**07.03.2012 Patentblatt 2012/10**

(73) Patentinhaber: **Siemens Aktiengesellschaft**
**80333 München (DE)**

(72) Erfinder:
• **MÜNCH, Philipp**
  **67663 Kaiserslautern (DE)**
• **LIU, Steven**
  **67663 Kaiserslautern (DE)**

(56) Entgegenhaltungen:
**WO-A1-2008/067784**

• **YASSER ABDEL-RADY IBRAHIM MOHAMED ET AL: "Robust High Bandwidth Discrete-Time Predictive Current Control with Predictive Internal Model-A Unified Approach for Voltage-Source PWM Converters" IEEE TRANSACTIONS ON POWER ELECTRONICS, IEEE SERVICE CENTER, PISCATAWAY, NJ, US LNKD- DOI:10.1109/TPEL.2007.911797, Bd. 23, Nr. 1, 1. Januar 2008 (2008-01-01) , Seiten 126-136, XP011198581 ISSN: 0885-8993**
• **JOERG WEIGOLD ET AL: "Predictive Current Control Using Identification of Current Ripple" IEEE TRANSACTIONS ON INDUSTRIAL ELECTRONICS, IEEE SERVICE CENTER, PISCATAWAY, NJ, USA LNKD- DOI:10.1109/TIE.2008.2007517, Bd. 55, Nr. 12, 1. Dezember 2008 (2008-12-01), Seiten 4346-4353, XP011237432 ISSN: 0278-0046**

**Beschreibung**

Die Erfindung betrifft ein Verfahren zum Regeln eines steuerbare Leistungshalbleiter aufweisenden Umrichters gemäß Anspruch 1. Vorteilhafte Ausführungsformen sind in den abhängigen Ansprüchen definiert.

Ein solches Verfahren ist aus dem Beitrag von Yasser Abdel-Rady Ibrahim Mohamed et al "Robust High Bandwidth Discrete-Time Predictive Current Control with Predictice Internal Model-A Unified Approach for Voltage-Source PWM Converters", erschienen in IEEE Transactions on Power Electronics, IEEE Service Center, Piscataway, NJ, US LNKD-DOI:10.1109/TPEL.2007.911797, Bd. 23, Nr. 1 vom 1. Januar 2008, Seiten 126 bis 136 bereits bekannt. Das dort beschriebene Verfahren stellt Zustandsistwerte und Zustandsollwerte bereit, die unter Bereitstellung von Regeldifferenzwerten miteinander verglichen werden. Die Regeldifferenzwerte werden einer Regelungseinheit zugeführt, die Stellspannungswerte bereitstellen. Der Umrichter wird in Abhängigkeit der Stellspannungswerte angesteuert. Darüber hinaus ist eine Beobachtungseinheit offenbart, mit welcher ein Umrichter moduliert wird. Aufgrund der Modulierung wird eine Verzögerung kompensiert.

Ein ähnliches Verfahren ist von Jörg Weigold et al "Predictive Current Control Using Identification of Current Ripple", erschienen in IEEE Transactions on Industrial Electronics, IEEE Service Center, Piscataway, NJ, USA, LNKD-DOI:10.1109/TIE.2008.2007517, Bd. 55, Nr. 12, 1. Dezember 2008, auf den Seiten 4346 bis 4353, XP011237432, ISSN: 0278-0046 offenbart.

Aus der WO 2008/067784 A1 ist ein Verfahren zur Regelung eines mehrstufigen Umrichters für die Hochspannungsgleichstromübertragung bekannt, wobei der Umrichter ein selbstgeführter Umrichter mit abschaltbaren Leistungshalbleitern ist. So besteht der Umrichter aus einer Brückenschaltung von Leistungshalbleiterventilzweigen, wobei jeder Leistungshalbleiterventilzweig eine Reihenschaltung von bipolaren Submodulen aufweist. Jedes Submodul verfügt wiederum über eine Leistungshalbleiterschaltung, die so mit einem Kondensator verschaltet ist, dass entweder die an dem Kondensator abfallende Spannung oder aber eine Nullspannung an den Ausgangsklemmen eines jeden Submoduls erzeugbar ist. Durch die Reihenschaltung der Submodule kann die an dem Leistungshalbleiterventil abfallende Spannung stufenweise eingestellt werden, wobei die Höhe einer Stufe der an der Kondensatoreinheit eines Submoduls abfallenden Spannung entspricht.

Den vorbekannten Lösungen zur Regelung eines solchen Umrichters haftet der Nachteil an, dass Verzögerungseffekte die aufgrund der bei der Regelung verwendeten Elektronik entstehen, nicht berücksichtigt werden. Aus diesem Grunde kann die Stabilität der Regelung nur gewährleistet werden, wenn aufgrund der gewählten Parameter die Regelung deutlich langsamer erfolgt als dies grundsätzlich möglich ist.

Aufgabe der Erfindung ist es daher, ein Verfahren der eingangs genannten Art bereitzustellen, bei dem Verzögerungseffekte berücksichtigt werden.

Die Erfindung löst diese Aufgabe dadurch, dass die Beobachtungseinheit neben den unverzögerten Zustandsistwerten $\underline{\hat{x}}(k)$ verzögerte Zustandsmodellmesswerte $\underline{\hat{y}}_d(k)$ bereitstellt, die messbaren Zustandsmesswerten $\underline{\hat{y}}_d(k)$ entsprechen, wobei die Zustandsmodellmesswerte $\underline{\hat{y}}_d(k)$ mit durch Messungen erhaltenen Zustandsmesswerten $\underline{y}_d(k)$ unter Gewinnung einer Modellabweichungsdifferenz verglichen werden, die Modellabweichungsdifferenz der Beobachtungseinheit eingangsseitig zugeführt und die Modellierung des Umrichters so durchgeführt wird, dass die Modellabweichungsdifferenz möglichst klein wird.

Erfindungsgemäß ist eine Beobachtungseinheit bereitgestellt, die den zu regelnden Umrichter modelliert. Der Umrichter wird mit anderen Worten in ein mathematisches Modell überführt, das Verzögerungseffekte, die durch die Regelelektronik und bei der Messwerteerfassung entstehen, berücksichtigt werden. Der Zustand des Umrichters wird hierbei zweckmäßigerweise durch die Regelgrößen, also beispielsweise die Netz-, Gleich- und Kreisströme, beschrieben, wobei die Regelgrößen in einem Zustandsvektor $\underline{\hat{x}}(k)$ zusammengefasst sind. Entsprechendes gilt für die Sollgrößen, die ebenfalls in einem Sollvektor $\underline{x}_{Soll}$ zusammengefasst werden. Ausgehend von den eingangsseitig zur Verfügung gestellten Stellspannungswerten modelliert die Beobachtungseinheit den Umrichter. Insbesondere wird das dynamische Verhalten des Umrichters mathematisch nachgebildet, wobei zweckmäßige Matrizen hergeleitet werden, die auf den Zustandsvektor beziehungsweise den Vektor der Stellparameter $\underline{u}(k)$ angewandt werden. Ausgangsseitig der Beobachtungseinheit wird dann ein Satz von Zustandsistwerten $\underline{\hat{x}}(k)$ bereitgestellt, wobei die Zustandsistwerte $\underline{\hat{x}}(k)$ Zustandsmesswerten entsprechen, die frei von Verzögerungseffekten sind. Die Zustandsmistwerte $\underline{\hat{x}}(k)$ entsprechen mit anderen Worten unverzögerten Messwerten des Zustandes des Umrichters und werden der Regelung zugeführt. Erfindungsgemäß kann die Regelung daher schneller ausgeführt werden, ohne dass Instabilitäten zu befürchten sind.

Erfindungsgemäß stellt die Beobachtungseinheit neben den unverzögerten Zustandsistwerten $\underline{\hat{x}}(k)$ verzögerte Zustandsmodellmesswerte $\underline{\hat{y}}_d(k)$ bereit, die messbaren Zustandsmesswerten $\underline{y}_d(k)$ entsprechen, wobei die Zustandsmodellmesswerte $\underline{\hat{y}}_d(k)$ mit durch Messungen erhaltenen Zustandsmesswerten $\underline{y}_d(k)$ unter Gewinnung einer Modellabweichungsdifferenz verglichen werden, die Modellabweichungsdifferenz der Beobachtungseinheit eingangsseitig zugeführt und die Modellierung des Umrichters so durchgeführt wird, dass die Modellabweichungsdifferenz möglichst klein ist. Gemäß dieser zweckmäßigen Weiterentwicklung erfolgt die Modellierung des Umrichters mit einer Rückkopplung, wobei ausgenutzt wird, dass das gewählte mathematische Modell des Umrichters nicht nur die unverzögerten Zustand-

sistwerte $\hat{\underline{x}}(k)$ liefert, sondern auch die mit Verzögerungseffekten behafteten Zustandsmodellmesswerte. Die Zustandsmodellmesswerte entsprechen daher den durch reale Messungen erhältlichen Zustandsmesswerten. Ein Vergleich der Zustandsmesswerte mit den Zustandsmodellmesswerten, also mit anderen Worten die Bildung der Modellabweichungsdifferenz zwischen diesen beiden Größen, gibt daher Aufschluss über die Güte der Modellierung. Die Modellabweichungsdifferenz wird der Beobachtungseinheit als zweite Eingangsgröße zugeführt. Durch ihre Minimierung wird daher das Regelungsverfahren verbessert. Im Idealfall ist die Modellabweichungsdifferenz gleich null.

Vorteilhafterweise sind die Zustandsistwerte Stromistwerte $\hat{\underline{x}}(k)$ und die Zustandssollwerte Stromsollwerte $\underline{x}_{Soll}(k)$. Die Zustandsistwerte des Umrichters können im Rahmen der Erfindung jedoch neben reinen Stromistwerten auch andere elektrische Größen wie Spannungen insbesondere Stellspannungen, oder dergleichen oder andere Größen wie die Temperatur bestimmter Bauteile umfassen. Die Zustandssollgrößen entsprechen in jedem Fall den Zustandsistgrößen, da ein Vergleich, also die Differenzbildung zwischen diesen Größen, sonst nicht möglich wäre.

Zur diesbezüglich zweckmäßigen Weiterentwicklung wird die Modellabweichungsdifferenz der Beobachtungseinheit über eine Rückführungseinheit zugeführt, welche die Modellabweichungsdifferenz zweckmäßig verstärkt. Wird der Zustand des Umrichters über einen Zustandsvektor $\hat{\underline{x}}(k)$, beispielsweise einem aus fünf Strömen des Umrichters bestehenden Vektor, beschrieben, ergibt sich auch ein Vektor für die Modellabweichungsdifferenz. In diesem Fall wendet die Rückführungseinheit eine aus Konstanten bestehende Matrix auf den Vektor der Modellabweichungsdifferenz an. Mit anderen Worten wird die Modellabweichungsdifferenz durch diese Matrix in einer Weise verstärkt, die für die weitere Modellierung des Umrichters unter Minimierung der Modellabweichungsdifferenz zweckmäßig ist.

Bei einer bevorzugten Variante des erfindungsgemäßen Verfahrens umfasst die Berücksichtigung von Verzögerungseffekten das Berücksichtigen von Messverzögerungen, die bei der digitalen Erfassung der elektrischen Ströme des Umrichters entstehen, und die Berücksichtigung von Stellverzögerungen, die von der Steuerelektronik verursacht werden. Bei der Erfassung der Zustandsmesswerte werden beispielsweise die Ströme des Umrichters gemessen. Das dabei gewonnen Messsignal wird in Abtastschritten k unter Gewinnung von Abtastwerten fortlaufend abgetastet. Die Abtastwerte werden anschließend digitalisiert. Die Modellierung der sich dabei einstellenden Messverzögerung erfolgt zweckmäßigerweise unter der Annahme, dass die Messverzögerung eine Zeitdauer von vier Abtastschritten entspricht. Es hat sich gezeigt, dass eine solche Annahme für einen selbstgeführten mehrstufigen Umrichter für die Hochspannungsgleichstromübertragung zweckmäßig ist.

Gemäß einer weiteren Ausgestaltung der Erfindung wird die eine Stellverzögerung $\tau$

$$\tau = (l-1)T + \tau'$$

modelliert, wobei $l$ der Anzahl der Abtastschritte entspricht, deren Summe kleiner ist als die Stellverzögerung $\tau$. $\tau'$ wird als Restanteil bezeichnet und ist in jedem Falle kürzer als die Zeitdauer zwischen zwei Abtastschritten T. Bei dieser Modellierung der Stellverzögerung hat sich eine Größe von $l=2$ als zweckmäßig für einen mehrstufigen selbstgeführten Umrichter erwiesen.

Zweckmäßigerweise wird der Umrichter mit Hilfe eines Zustandsraummodells gemäß

$$\hat{\underline{x}}'_{k+1} = \underline{\Phi}\,\hat{\underline{x}}'_{k} + \underline{\Gamma}\underline{u}_{k}$$

$$\hat{\underline{y}}_{d} = \underline{H}\hat{\underline{x}}'_{k}$$

modelliert, wobei $\hat{\underline{x}}'(k)$ einem Zustandsvektor des Umrichters einschließlich verzögerten Zuständen, $\underline{u}_{k}$ einem Vektor der Stellspannungen, $\underline{\Phi}$, $\underline{\Gamma}$ und $\underline{H}$ Modellmatrizen und $\hat{\underline{y}}_{d}$ einem Vektor von mit Verzögerungen behafteten Zustandsmodellmesswerten entsprechen. $k$ indiziert den jeweiligen Abtastschritt. Das gewählte Streckenmodell ist die diskrete Form einer zeitkontinuierlichen Differenzialgleichung und wird auch als Differenzengleichung bezeichnet. Dem gemäß berechnet sich der Zustand im Abtastschritt $k+1$ aus dem Zustand des Zustandsvektors x im Abtastschritt $k$ in Abhängigkeit der Stellspannungen $\underline{u}(k)$.

Bei einem mehrstufigen Umrichter mit Leistungshalbleiterventilzweigen, die zu einer Sechs-Puls-Brücke miteinander verschaltet sind, wobei jeder Leistungshalbleiterventilzweig aus einer Reihenschaltung von bipolaren Submodulen besteht, wobei jedes Submodul eine Leistungshalbleiterschaltung sowie einen Kondensator aufweist, ist es ausreichend den Zustand des Umrichters mit lediglich fünf Strömen zu beschreiben, da sich die anderen Ströme des Umrichters aus den fünf Zustandsgrößen berechnen lassen. Die an dem Umrichter auftretenden Ströme sind beispielsweise Netzströme, Gleichströme sowie Kreisströme zwischen den Ventilzweigen des Umrichters. Um Verzögerungseffekte im Modell berücksichtigen zu können, wird der Zustandsvektor $\hat{\underline{x}}_{k}$ um die verzögerten Zustandsmesswerte $\underline{y}_{d}$ zu $\hat{\underline{x}}'(k)$ erweitert.

Die Erfindung und deren Vorteile werden nachfolgend anhand von Ausführungsbeispielen der Erfindung unter Bezug auf die Figuren der Zeichnung beschrieben, wobei gleiche Bezugszeichen auf gleiche Bauteile verweisen und wobei

Figuren 1 und 3    eine schematische Darstellung eines beispielhaften Umrichters, der mit dem erfindungsgemäßen Verfahren geregelt wird,

Figur 4    ein erstes Ausführungsbeispiel des erfindungsgemäßen Verfahrens schematisch verdeutlicht und

Figur 5    ein weiteres Ausführungsbeispiel des erfindungsgemäßen Verfahrens zeigt.

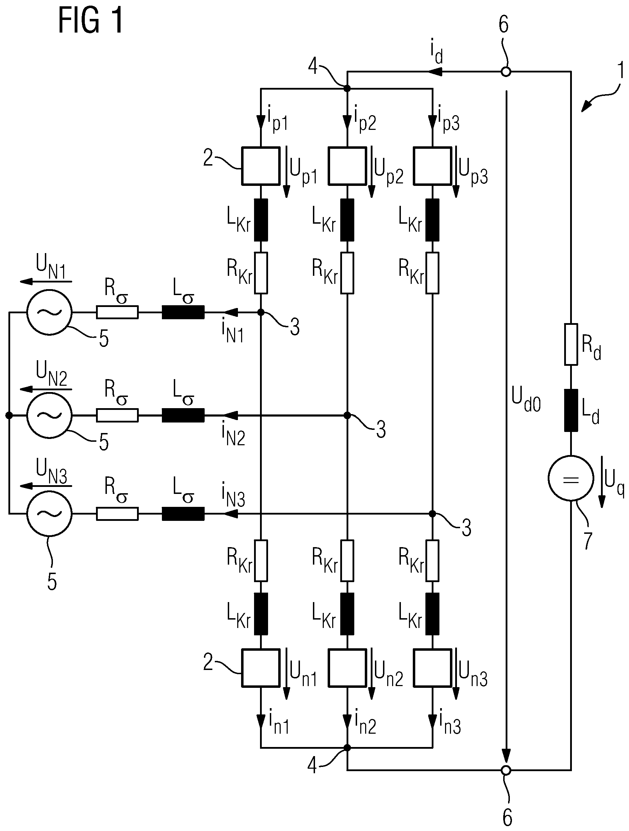

Figur 1 zeigt schematisch den Aufbau eines zu regelnden Umrichters 1, der zum Anschluss an ein in Figur 1 figürlich nicht dargestelltes Wechselstromnetz vorgesehen ist. Der Umrichter 1 verfügt über sechs Leistungshalbleiterventilzweige 2, die zu einer Sechs-Puls-Brückenschaltung miteinander verschaltet sind. Dabei erstreckt sich jeder Leistungshalbleiterventilzweig 2 zwischen einem Wechselspannungsanschluss 3 sowie einem Gleichspannungsanschluss 4. Jeder Gleichspannungsanschluss 3 ist mit einer Sekundärwicklung 5 eines figürlich nicht vollständig dargestellten Transformators verbunden, wobei die Sekundärwicklungen 5 zu einem Stern miteinander verschaltet sind. An den Sekundärwicklungen 5 fallen die Spannungen $u_{N1}$, $u_{N2}$ und $u_{N3}$ ab. Zwischen dem Wechselspannungsanschluss 3 und der Sekundärwicklung 5 sind ferner in jeder Phase ein Ohmscher Widerstand $R_\sigma$ und eine Induktivität $L_\sigma$ angeordnet, wobei die Netzströme $i_{N1}$, $i_{N2}$ und $i_{N3}$ fließen. Ferner sind Induktivitäten $L_{Kr}$ und Ohmsche Widerstände $R_{Kr}$ zwischen jedem Wechselspannungsanschluss und dem dazugehörigen Ventilzweig 2 angeordnet. Der durch die jeweiligen Leistungshalbleiterventile 2 fließende Strom ist $i_{p1}$, $i_{p2}$, $i_{p3}$, $i_{N1}$, $i_{N2}$ und $i_{N3}$ bezeichnet. Die an den Leistungshalbleiterventilzweigen insgesamt abfallende Spannung ist mit $u_{p1}$, $u_{p2}$, $u_{p3}$ sowie $u_{n1}$, $u_{N2}$ und $u_{N3}$. Die Gleichspannungsanschlüsse 4 sind Teil eines Gleichspannungskreises 6, in dem ein Gleichstrom $i_d$ fließt.

Der in Figur 1 oben dargestellte positive Pol des Gleichspannungskreises 6 ist mit dem unten dargestellten negativen Pol über einen Ohmschen Widerstand $R_D$, eine Induktivität $L_D$ sowie einen schematisch angedeuteten Kondensator 7 verbunden. Die zwischen dem positiven Pol und dem negativen Pol des Gleichspannungskreises 6 abfallende Spannung ist $U_{D0}$, die an dem Kondensator 7 abfallende Spannung $U_q$.

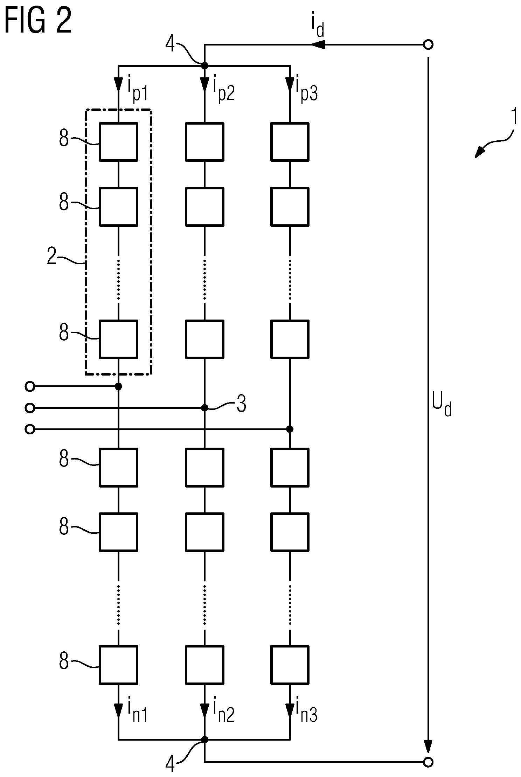

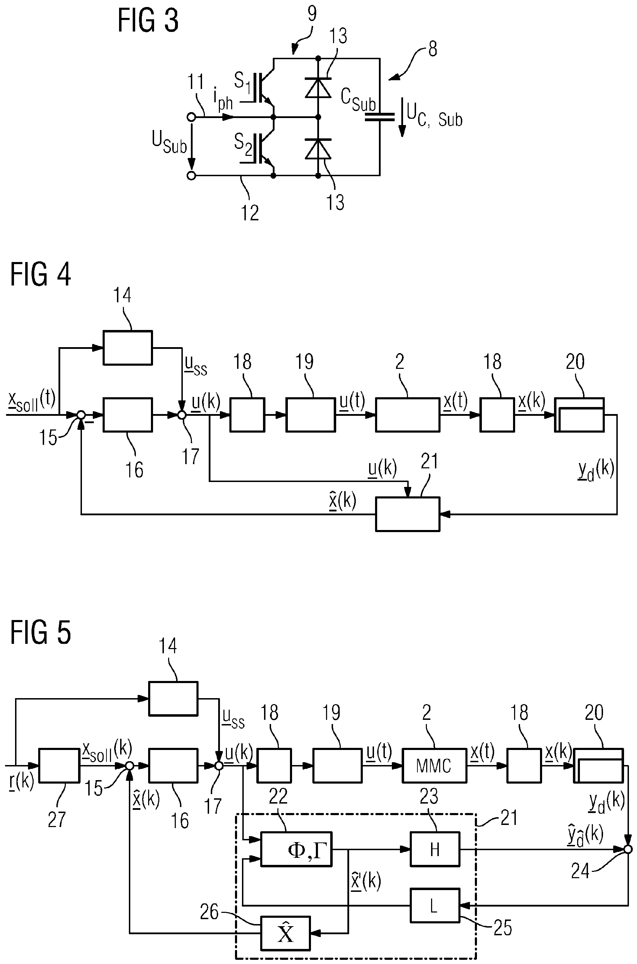

In Figur 2 ist der Aufbau der Leistungshalbleiterventilzweige 2 genauer dargestellt. Es ist erkennbar, dass jeder Leistungshalbleiterventilzweig 2 eine Reihenschaltung von bipolaren Submodulen 8 aufweist, deren Aufbau in Figur 3 verdeutlicht ist. Es ist erkennbar, dass jedes Submodul 8 über eine Leistungshalbleiterschaltung 9 verfügt, die mit einem Submodulkondensator 10 verbunden ist, so dass an Ausgangsklemmen 11 und 12 jedes Submoduls 8 entweder die an dem Submodulkondenstor 10 abfallende Spannung $u_{c,sub}$ oder aber eine Nullspannung erzeugbar ist. Dazu weist die Leistungshalbleiterschaltung 9 zwei abschaltbare Leistungshalbleiter S1 und S2 auf, die für hohe Spannungen ausgelegt und beispielsweise als IGBT, GTO oder dergleichen realisiert sind. Jedem abschaltbaren Leistungshalbleiter S1 beziehungsweise S2 ist eine Freilaufdiode 13 gegensinnig parallel geschaltet.

Figur 4 zeigt ein Ausführungsbeispiel des erfindungsgemäßen Verfahrens zum Regeln eines Umrichters gemäß der Figuren 1 bis 3. Wie bei Regelungen allgemein üblich, werden auch hier Sollwerte mit Istwerten verglichen oder mit anderen Worten die Differenz zwischen einem Sollwert und einem Istwert gebildet, wobei anschließend die auf diese Weise gewonnene Regeldifferenz einer Reglungseinheit zugeführt wird, die in den dargestellten Ausführungsbeispielen eine Vorsteuereinheit 14 und einen Regler 16 umfasst. Die Regelgrößen des in Figur 1 gezeigten Umrichters sind die im Umrichter 1 fließenden Ströme. Hierbei ist es jedoch ausreichend, lediglich fünf Ströme zu betrachten, da sich die übrigen in Figur 1 gezeigten Ströme aus den bekannten fünf Strömen berechnen lassen. Sämtliche Regelgrößen werden erfindungsgemäß in einem Zustandsvektor $\hat{x}(k)$ zusammengefasst. Entsprechendes gilt für die Sollgrößen, die mit dem Vektor $x_{Soll}(k)$ vorgegeben sind. Der Sollvektor $x_{Soll}(k)$ wird zum einen der Vorsteuereinheit 14 zugeführt, welche ausgehend von den Sollgrößen $x_{Soll}(k)$ stationäre Stellspannungen $u_{SS}$ berechnet. Mit Hilfe der Addiereinheit 15 wird die Differenz zwischen den Sollwerten $x_{Soll}(k)$ und den Zustandsistwerten $\hat{x}(k)$, die hier ausschließlich aus Stromistwerten bestehen, gebildet, wobei Regeldifferenzwerte erzeugt werden, die dem Regeler 16 zugeführt werden. Ausgangsseitig stellt der Regler 16 Stellspannungen für Leistungshalbleiterventilzweige 2 des Umrichters 1 gemäß Figur 1 bereit. Zu diesen Stellspannungen werden die stationären Stellspannungen $u_{SS}$ mittels eines Addierers 17 hinzuaddiert, wobei im Abtastschritt k der Stellspannungsvektor $u(k)$ erzeugt wird. Die Stellspannungen des Stellspannungsvektors $u(k)$ werden nun mit Hilfe eines Analog/Ditigalwandlers 18 unter Gewinnung von Abtastwerten abgetastet und die Abtastwerte anschließend digitalisiert. Die nunmehr digital vorliegenden Stellspannungen $u(k)$ werden schließlich einer Steuerelektronik 19 zugeführt, welche in Abhängigkeit der jeweiligen Stellspannung $u(k)$ Steuersignale für die Leistungshalbleiter S1, S2 eines jeden Leistungshalbleiterventilzweiges 2 erzeugt. Die Steuersignale werden schließlich dem Umrichter 2 zugeführt, woraufhin sich die gewünschten Ströme einstellen, die wiederum durch den Zustandsvektor $\hat{x}(k)$ symbolisiert sind. Die Umrichterströme werden mittels nicht dargestellter Sensoren gemessen, beispielsweise mit Hilfe von Stromwandlern, wobei der Analog/Digitalwandler 18 das geeichte Signal des Stromwandlers abgetastet und die dabei gewonnen Abtastwerte digitalisiert, so dass sich zum Abtastzeitpunkt $k$ der Zustandsvektor $\hat{\underline{x}}(k)$ ergibt, der beispielsweise fünf unterschiedliche Ströme umfasst, so dass der Umrichter 2 vollständig charakterisiert ist.

In Figur 4 ist ferner eine Verzögerungseinheit 20 gezeigt, die berücksichtigt, dass die erfassten Strommesswerte mit Verzögerungen behaftet sind. Diese Verzögerungen werden als Messverzögerungen oder Messtotzeiten bezeichnet. $\underline{y}_d(k)$ repräsentiert einen Zustandsvektor mit verzögerten Strommesswerten. Die verzögerten Strommesswerte $\underline{y}_d(k)$ werden einer Beobachtungseinheit 21 zugeführt, die als zweites Eingangssignal die Stellspannungen $\underline{u}(k)$ erhält. Die Beobachtereinheit 21, auf die später noch genauer eingegangen werden wird, prädiziert mit Hilfe eines mathematischen Modells des Umrichters 1, das sowohl Stell- als auch die Messverzögerungen berücksichtigt, die unverzögerten Stromistwerte $\hat{\underline{x}}(k)$ und stellt diese ausgangsseitig bereit. Der Regelungseinheit 16 werden dann die unverzögerten Stromistwerte $\hat{\underline{x}}(k)$ zur Verfügung gestellt.

Figur 5 verdeutlicht ein weiteres Ausführungsbeispiel der Erfindung das dem in Figur 4 gezeigten Ausführungsbeispiel weitestgehend entspricht. Allerdings umfasst der die Zustandssollgrößen umfassende Vektor $\underline{x}_{Soll}(k)$ neben reinen Sollstromgrößen $\underline{r}(k)$ auch weitere Zustandsgrößen, die von einer Vorfiltereinheit 27 aus den Sollstromgrößen $\underline{r}(k)$ berechnet werden. Der Vorsteuereinheit 14 werden nur den Sollstromgrößen $\underline{r}(k)$ zugeführt. Der Ausgang der Vorfiltereinheit 27 umfasst die Zustandssollgrößen $\underline{x}_{Soll}(k)$. Die weiteren Verfahrensschritte laufen analog zu dem in Figur 4 gezeigten Ausführungsbeispiel ab. Der Aufbau der Beobachtereinheit 21 ist jedoch genauer dargestellt. Es ist erkennbar, dass die Beobachtungseinheit 21 eine Modelleinheit 22 aufweist, mit deren Hilfe der Umrichter 2 modelliert wird. Ausgangsseitig der Modelleinheit 22 wird ein Vektor $\hat{\underline{x}}'(k)$ bereitgestellt, der sowohl die unverzögerten Stromistwerte $\hat{\underline{x}}(k)$, als auch Strommodellmesswerte umfasst, die den Stromistwerten entsprechen, jedoch mit Verzögerungen behaftet sind $\hat{\underline{y}}_d(k)$. Mit anderen Worten entsprechen Strommodellmesswerte $\hat{\underline{y}}_d(k)$ reell gemessenen Strommesswerten $\underline{y}_d(k)$. Die Einheit 23 schneidet aus dem Ausgang der Modelleinheit 22 nur die verzögerten Strommodellmesswerte $\hat{\underline{y}}_d(k)$ heraus, wobei die Strommodellmesswerte $\hat{\underline{y}}_d(k)$ durch einen Addierer 24 von den real gemessenen mit Verzögerungen behafteten Messwerten $\underline{y}_d(k)$ abgezogen werden. Die auf diese Weise gewonnene Modellabweichungsdifferenz wird schließlich einer Rückführungseinheit 25 zugeführt, welche eine Verstärkungs- oder Rückführungsmatrix $L$ auf den Vektor der Modellabweichungsdifferenz anwendet. Hierdurch werden die Modellabweichungsdifferenzen verstärkt. Die verstärkten Modellabweichungsdifferenzen werden der Modelleinheit 22 schließlich als Eingang zugeführt, wobei die Modellierung so erfolgt, dass $\hat{\underline{y}}_d(k)$ und $\underline{y}_d(k)$ konvergieren. Mit anderen Worten erfolgt die Modellierung des Umrichters so, dass die Modellabweichungsdifferenz minimal wird.

Zum Herausschneiden der unverzögerten Stromistwerte $\hat{\underline{x}}(k)$ aus dem auch verzögerte Messwerte umfassenden Zustandsvektor $\hat{\underline{x}}'(k)$ als Ausgang der Modelleinheit 22 ist eine Einheit 26 vorgesehen. Der Ausgang der Einheit 26 $\hat{\underline{x}}'(k)$ wird dem Addierer 15 zugeführt und somit der weiteren Regelung zugrunde gelegt.

Im Folgenden wird auf das verwendete mathematische Modell eingegangen. Zur Modellierung von Messverzögerungen muss der Zustandsvektor, also der Vektor mit den unverzögerten Stromistwerten, um die verzögerten Messwerte erweitert werden.

$$\hat{\underline{x}}'(k) = \begin{pmatrix} \hat{\underline{x}}_k \\ \hat{\underline{y}}_{1d} \\ \vdots \\ \hat{\underline{y}}_{nd} \end{pmatrix}$$

Sei $\hat{\underline{y}}_d(k)$ ein Vektor der verzögerten Messgrößen, so gilt für die Verzögerung von einem Abtastschritt:

$$\underline{y}_{1d}(k+1) = \underline{y}(k)$$

Bei Verzögerungen von mehr als einem Abtastschritt gilt weiter

$$\underline{y}_{2d}(k+1) = \underline{y}_{1d}(k)$$

und

$$\underline{y}_d(k+1) = \underline{y}_{nd}(k)$$

Hieraus lässt sich das allgemeine Modell ableiten:

$$\underline{x}_{k+1} = \underline{\Phi}_d \, \underline{x}_k + \underline{\Gamma}_d \, \underline{u}_k$$

$$\underline{y}_d = \underline{H}_d \, \underline{x}_k$$

Weiterhin gelten:

$$\underline{\Phi}_d = \begin{pmatrix} \underline{\Phi} & \underline{0} & \dots & \underline{0} \\ \underline{H} & \underline{0} & \dots & \underline{0} \\ \underline{0} & \underline{I} & \dots & \underline{0} \\ \vdots & \dots & \ddots & \underline{0} \end{pmatrix}$$

$$\underline{\Gamma}_d = \begin{pmatrix} \underline{\Gamma} \\ \underline{0} \\ \vdots \\ \underline{0} \end{pmatrix}$$

$$\underline{H}_d = \begin{pmatrix} \underline{0} & \underline{0} & \dots & \underline{I} \end{pmatrix}$$

Somit steht ein Streckenmodell zur Verfügung, mit dessen Hilfe die Beobachtungseinheit 21 entworfen werden kann.

Die Modelleinheit 22 der Beobachtungseinheit 21 verwendet zur Modellierung des Umrichters 2 das oben genannte Streckenmodell gemäß

$$\underline{\hat{x}}'(k+1) = \underline{\Phi}\underline{\hat{x}}'(k) + \underline{\Gamma}\underline{u}(k)$$

Der Beobachtungsfehler kann nun definiert werden zu

$$\underline{\tilde{x}} = \underline{x} - \underline{\hat{x}}'$$

Damit die Strommodellmesswerte auch gegen die gemessenen realen Strommesswerte konvergieren, wird eine Rückführungsmatrix L eingeführt, so dass sich folgende Gleichung ergibt:

$$\underline{\hat{x}}'(k+1) = \underline{\Phi}\underline{\hat{x}}'(k) + \underline{\Gamma}\underline{u}(k) + \underline{L}\left(\underline{y}(k) - \underline{H}\underline{\hat{x}}'(k)\right)$$

Zum Entwurf der Rückführungsmatrix muss die Fehlergleichung

$$\underline{\tilde{x}}(k+1) = \left(\underline{\Phi} - \underline{L}\underline{H}\right)\underline{\tilde{x}}(k)\,,$$

wobei die Dynamik $(\underline{\Phi} - \underline{L}\underline{H})$ so gewählt wird, dass die Strommodellmesswerte $\underline{\hat{y}}_d(k)$ auch gegen die gemessenen Messwerte $\underline{y}_d(k)$ konvergieren und zwar schneller als die Streckendynamik.

Zur Modellierung von Stellverzögerungen, die von der Steuerelektronik 19 erzeugt werden wird folgendes System angewandt:

$$\underline{x}(k+1) = \underline{\Phi}\,\underline{x}(k) + \underline{\Gamma}_0 u(k-(l-1)) + \underline{\Gamma}_1 \underline{u}(k-1).$$

Für die Stellverzögerung $\tau$ gilt

$$\tau = (l-1) \cdot T + \tau'$$

Die Systemmatrizen lauten:

$$\underline{\Phi} = e^{\underline{A}T}$$

$$\underline{\Gamma}_0 = \int_0^{h-\tau'} e^{\underline{A}s}\,ds\,\underline{B}$$

$$\underline{\Gamma}_1 = e^{\underline{A}(T-\tau')}\int_0^{\tau'} e^{\underline{A}s}\,ds\,\underline{B}$$

$$\begin{pmatrix} \underline{x}(k+1) \\ \underline{u}(k-(l-1)) \\ \underline{u}(k-(l-2)) \\ \underline{u}(k-1) \\ \underline{u}(k) \end{pmatrix} = \begin{pmatrix} \underline{\Phi} & \underline{\Gamma}_1 & \underline{\Gamma}_0 & \underline{0} & \underline{0} \\ \underline{0} & \underline{0} & \underline{I} & \underline{0} & \underline{0} \\ \underline{0} & \underline{0} & \underline{0} & \underline{I} & \underline{0} \\ \underline{0} & \underline{0} & \underline{0} & \underline{0} & \underline{I} \\ \underline{0} & \underline{0} & \underline{0} & \underline{0} & \underline{0} \end{pmatrix} \begin{pmatrix} \underline{x}(k) \\ \underline{u}(k-1) \\ \underline{u}(k-3) \\ \underline{u}(k-2) \\ \underline{u}(k-1) \end{pmatrix} + \begin{pmatrix} \underline{0} \\ \underline{0} \\ \underline{0} \\ \underline{0} \\ \underline{I} \end{pmatrix} \underline{u}(k)$$

Der Umrichter kann vollständig mit Mess- und Stellverzögerungen modelliert werden, indem man die oben gezeigten Modellierungen kombiniert. Es ergibt sich als direkte Darstellung der Differenzgleichung des modellierten Systems:

$$\underline{x}_\tau^d(k+1) = \underline{\Phi}_\tau^d\,\underline{x}_\tau^d(k) + \underline{\Gamma}_\tau^d u(k)$$

$$\underline{y}_d = \underline{H}_\tau^d\,\underline{x}_\tau^d(k)$$

Die Systemmatrizen werden hier beispielhaft für eine Messverzögerung d in Abtastschritten und eine Stellverzögerung von $\tau=(l-1)\cdot T+\tau'$ erstellt, wobei auch nichtganzzahlige Stellverzögerungen modelliert werden.

$$
\underline{\Phi}_\tau^d =
\begin{pmatrix}
\underline{\Phi} & \underline{0} & \underline{0} & \cdots & \underline{0} & \underline{\Gamma}_1 & \underline{\Gamma}_0 & \cdots & \underline{0} \\
\underline{H} & \underline{0} & \underline{0} & \cdots & \underline{0} & \underline{0} & \underline{0} & \cdots & \underline{0} \\
\underline{0} & \underline{I} & \underline{0} & \cdots & \underline{0} & \underline{0} & \underline{0} & \cdots & \underline{0} \\
\underline{0} & \underline{0} & \underline{I} & \cdots & \underline{0} & \underline{0} & \underline{0} & \cdots & \underline{0} \\
\vdots & \vdots & \vdots & \ddots & \vdots & \vdots & \vdots & \ddots & \vdots \\
\underline{0} & \underline{0} & \underline{0} & \cdots & \underline{I} & \underline{0} & \underline{0} & \cdots & \underline{0} \\
\underline{0} & \underline{0} & \underline{0} & \cdots & \underline{0} & \underline{0} & \underline{I} & \cdots & \underline{0} \\
\vdots & \vdots & \vdots & \cdots & \vdots & \vdots & \vdots & \ddots & \vdots \\
\underline{0} & \underline{0} & \underline{0} & \cdots & \underline{0} & \underline{0} & \underline{0} & \cdots & \underline{I} \\
\underline{0} & \underline{0} & \underline{0} & \cdots & \underline{0} & \underline{0} & \underline{0} & \cdots & \underline{0}
\end{pmatrix}
$$

$$
\underline{x}_\tau^d =
\begin{pmatrix}
\hat{\underline{x}}_k \\
\underline{y}_k \\
\underline{y}_{k-1} \\
\vdots \\
\underline{y}_{k-d} \\
\underline{u}(k-l+1) \\
\vdots \\
\underline{u}(k-1) \\
\underline{u}(k)
\end{pmatrix}
$$

$$
\underline{\Gamma}_\tau^d =
\begin{pmatrix}
\underline{0} \\
\underline{0} \\
\underline{0} \\
\vdots \\
\underline{0} \\
\underline{0} \\
\vdots \\
\underline{0} \\
\underline{I}
\end{pmatrix}
$$

$$
\underline{H}_\tau^d = \begin{pmatrix} \underline{0} & \underline{0} & \underline{0} & \cdots & \underline{I} & \underline{0} & \cdots & \underline{0} \end{pmatrix}
$$

Für den mehrstufigen Umrichter gemäß Figur 1 wird l=2 und d=4 angenommen. Es ergeben sich dann folgende Matrizen:

$$\Phi_{MMC} = \begin{pmatrix} \underline{\Phi} & \underline{0} & \underline{0} & \underline{0} & \underline{0} & \underline{\Gamma}_1 & \underline{\Gamma}_0 \\ \underline{H} & \underline{0} & \underline{0} & \underline{0} & \underline{0} & \underline{0} & \underline{0} \\ \underline{0} & \underline{I} & \underline{0} & \underline{0} & \underline{0} & \underline{0} & \underline{0} \\ \underline{0} & \underline{0} & \underline{I} & \underline{0} & \underline{0} & \underline{0} & \underline{0} \\ \underline{0} & \underline{0} & \underline{0} & \underline{I} & \underline{0} & \underline{0} & \underline{0} \\ \underline{0} & \underline{0} & \underline{0} & \underline{0} & \underline{0} & \underline{0} & \underline{I} \\ \underline{0} & \underline{0} & \underline{0} & \underline{0} & \underline{0} & \underline{0} & \underline{0} \end{pmatrix}$$

$$\hat{\underline{x}}'_{MMC} = \begin{pmatrix} \hat{\underline{x}}_k \\ \underline{y}_k \\ \underline{y}_{k-1} \\ \underline{y}_{k-2} \\ \underline{y}_{k-3} \\ \underline{u}(k-1) \\ \underline{u}(k) \end{pmatrix}$$

$$\underline{\Gamma}_{MMC} = \begin{pmatrix} \underline{0} \\ \underline{0} \\ \underline{0} \\ \underline{0} \\ \underline{0} \\ \underline{0} \\ \underline{I} \end{pmatrix}$$

$$\underline{H}_{MMC} = \begin{pmatrix} \underline{0} & \underline{0} & \underline{0} & \underline{0} & \underline{I} & \underline{0} & \underline{0} \end{pmatrix}$$

Mit der auf dieser Weise möglichen Modellierung des Umrichters können die unverzögerten Stromistwerte berechnet werden.

**Patentansprüche**

1.  Verfahren zum Regeln eines steuerbare Leistungshalbleiter aufweisenden Umrichters (1), bei dem

    - Zustandsistwerte $\hat{\underline{x}}(k)$, die den Zustand des Umrichters (1) beschreiben, mit Zustandssollwerten $\underline{x}_{Soll}(k)$ unter Gewinnung von Regeldifferenzwerten verglichen werden,
    - die Regeldifferenzwerte einer Regelungseinheit (14, 16) zugeführt werden, die an ihrem Ausgang Stellspannungswerte $\underline{u}(k)$ erzeugt, und
    - eine Steuerelektronik (19) in Abhängigkeit der Stellspannungswerte $\underline{u}(k)$ Steuersignale bereitstellt und an die Leistungshalbleiter (S1,S2) des Umrichters (1) überträgt, wobei die Regelungseinheit (14, 16) solche Stellspannungswerte $\underline{u}(k)$ generiert, dass die Regeldifferenzwerte möglichst klein werden, wobei die Zustandsistwerte $\hat{\underline{x}}(k)$ von einer Beobachtungseinheit (21) ausgehend von den Stellspannungswerten $\underline{u}(k)$ berechnet werden, wobei die Beobachtungseinheit (21) den Umrichter (1) modelliert und Verzögerungseffekte berücksichtigt, so dass die Zustandsistwerte $\hat{\underline{x}}(k)$ von Verzögerungseffekten befreiten unverzögerten Strommesswerten entsprechen,

**dadurch gekennzeichnet, dass**

die Beobachtungseinheit (21) neben den unverzögerten Zustandsistwerten $\hat{\underline{x}}(k)$ verzögerte Zustandsmodellmesswerte $\hat{\underline{y}}_d(k)$ bereitstellt, die messbaren Zustandsmesswerten $\hat{\underline{y}}_d(k)$ entsprechen, wobei die Zustandsmodellmesswerte $\underline{y}_d(k)$ mit durch Messungen erhaltenen Zustandsmesswerten $\underline{y}_d(k)$ unter Gewinnung einer Modellabweichungsdifferenz verglichen werden, die Modellabweichungsdifferenz der Beobachtungseinheit (21) eingangsseitig zugeführt und die Modellierung des Umrichters (1) so durchgeführt wird, dass die Modellabweichungsdifferenz möglichst klein wird.

2. Verfahren nach Anspruch 1,
   **dadurch gekennzeichnet, dass**
   die Zustandsistwerte Stromistwerte $\hat{\underline{x}}(k)$ und die Zustandssollwerte Stromsollwerte $\underline{x}_{Soll}(k)$ sind.

3. Verfahren nach einem der vorhergehenden Ansprüche,
   **dadurch gekennzeichnet, dass**
   die Modellabweichungsdifferenz der Beobachtungseinheit (21) über eine Rückführungseinheit (25) zuführt, welche die Modellabweichungsdifferenzen verstärkt.

4. Verfahren nach einem der vorhergehenden Ansprüche,
   **dadurch gekennzeichnet, dass**
   die Berücksichtigung von Verzögerungseffekten, das Berücksichtigen von Messverzögerungen, die bei der digitalen Erfassung der Zustandsgrößen des Umrichters (1) entstehen, und die Berücksichtung von Stellverzögerungen umfasst, die von der Steuerelektronik (19) verursacht werden.

5. Verfahren nach einem der vorhergehenden Ansprüche,
   **dadurch gekennzeichnet, dass** der Umrichter mit Hilfe eines Zustandraummodells gemäß

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

modelliert wird, wobei $\hat{\underline{x}}'(k)$ einem Zustandsvektor des Umrichters einschließlich verzögerten Zuständen, $\underline{u}_k$ einem Vektor der Stellspannungen, $\underline{\Phi}$, $\underline{\Gamma}$ und $\underline{H}$ Modellmatrizen und $\hat{\underline{y}}_d$ einem Vektor von mit Verzögerungen behafteten Zustandsmodellmesswerten entsprechen.

6. Verfahren nach einem der vorhergehenden Ansprüche,
   **dadurch gekennzeichnet, dass**
   der Umrichter (1) ein Multilevel-Umrichter ist, der zu einer Brückenschaltung miteinander verbunden Leistungshalbleiterventilzweige (2) aufweist, wobei jeder Leistungshalbleiterventilzweig (2) aus einer Reihenschaltung von bipolaren Submodulen (8) besteht und jedes Submodul (8) eine Schaltung (9) von Leistungshalbleitern sowie eine parallel dazu angeordnete Kondensatoreinheit (10) umfasst.

**Claims**

1. Method for controlling a converter (1) having controllable power semiconductors, in which

   - state actual values $\hat{\underline{x}}(k)$, which describe the state of the converter (1), are compared with state setpoint values $\underline{x}_{setpoint}(k)$ to obtain control difference values,
   - the control difference values are fed to a control unit (14, 16), which generates actuating voltage values $\underline{u}(k)$ at its output, and
   - control electronics (19) provide control signals depending on the actuating voltage values $\underline{u}(k)$ and transmit them to the power semiconductors (S1, S2) of the converter (1), wherein the control unit (14, 16) generates such actuating voltage values $\underline{u}(k)$ that the control difference values become as small as possible, wherein the state actual values $\hat{\underline{x}}(k)$ are calculated by an observation unit (21) proceeding from the actuating voltage values $\underline{u}(k)$, wherein the observation unit (21) models the converter (1) and takes delay effects into account so that the state actual values $\hat{\underline{x}}(k)$ correspond to the instantaneous current measurement values freed of delay effects,

**characterized in that**

the observation unit (21) provides, in addition to the instantaneous state actual values $\overset{\wedge}{\underline{x}}(k)$, delayed state model measurement values $\overset{\wedge}{\underline{y}}_d(k)$, which correspond to measurable state Frei verwendbar measurement values $\underline{y}_d(k)$, wherein the state model measurement values $\overset{\wedge}{\underline{y}}_d(k)$ are compared with state measurement values $\underline{y}_d(k)$ obtained through measurements to obtain a model deviation difference, the model deviation difference is fed to the input side of the observation unit (21) and the modelling of the converter (1) is carried out so that the model deviation difference becomes as small as possible.

2. Method according to Claim 1,
   **characterized in that**
   the state actual values are current actual values $\overset{\wedge}{\underline{x}}(k)$ and the state setpoint values are current setpoint values $\underline{x}_{setpoint}(k)$.

3. Method according to either of the preceding claims,
   **characterized in that**
   the model deviation difference feeds to the observation unit (21) via a feedback unit (25), which amplifies the model deviation differences.

4. Method according to one of the preceding claims,
   **characterized in that**
   the taking into account of delay effects comprises the taking into account of measurement delays arising during digital detection of the state variables of the converter (1) and the taking into account of actuating delays caused by the control electronics (19).

5. Method according to one of the preceding claims,
   **characterized in that**
   the converter is modelled with the aid of a state space model according to

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

Frei verwendbar wherein $\overset{\wedge}{\underline{x}}'(k)$ corresponds to a state vector of the converter including delayed states, $\underline{u}_k$ corresponds to a vector of the actuating voltages, $\underline{\Phi}$, $\underline{\Gamma}$ and $\underline{H}$ correspond to model matrices and $\hat{\underline{y}}_d$ corresponds to a vector of state model measurement values afflicted with delays.

6. Method according to one of the preceding claims,
   **characterized in that**
   the converter (1) is a multilevel converter, which has power semiconductor valve branches (2) connected to one another to form a bridge circuit, wherein each power semiconductor valve branch (2) consists of a series circuit composed of bipolar submodules (8) and each submodule (8) comprises a circuit (9) composed of power semiconductors and a capacitor unit (10) arranged in parallel therewith.

**Revendications**

1. Procédé de régulation d'un onduleur (1) ayant un semi-conducteur de puissance pouvant être commandé, dans lequel

   - on compare des valeurs $\overset{\wedge}{\underline{x}}(k)$ réelles d'état, qui décrivent l'état de l'onduleur (1), à des valeurs $\underline{x}_{Soll}(k)$ de consigne d'état, en obtenant des valeurs de différence de régulation,
   - on envoie les valeurs de différence de régulation à une unité (14, 16) de régulation, qui produit, à sa sortie, des valeurs $\underline{u}(k)$ de tension de réglage et
   - une électronique (19) de commande émet des signaux de commande en fonction des valeurs $\underline{u}(k)$ de tension de réglage et les transmet aux semi-conducteurs (S1, S2) de puissance de l'onduleur (1), l'unité (14, 16) de régulation produisant des valeurs $\underline{u}(k)$ de tension de réglage telles que les valeurs de différence de régulation deviennent aussi petites que possible, dans lequel on calcule les valeurs $\hat{\underline{x}}(k)$ réelles d'état par une unité (21) d'observation à partir des valeurs $u(k)$ de tension de réglage, l'unité (21) d'observation modélisant l'onduleur (1) et tenant compte d'effets de retard, de manière à ce que les valeurs $\hat{\underline{x}}(k)$ réelles d'état correspondent aux valeurs de mesure de courant non-retardées débarrassées d'effets de retard ;

**caractérisé en ce que**
l'unité (21) d'observation met à disposition, outre les valeurs $\hat{\underline{x}}(k)$ réelles d'état non-retardées, des valeurs $\hat{\underline{y}}_d(k)$ de mesure de modèle d'état retardées, qui correspondent à des valeurs $\underline{y}_d(k)$ de mesure d'état mesurables, les valeurs $\hat{\underline{y}}_d(k)$ de mesure de modèle d'état étant comparées à des valeurs $\underline{y}_d(k)$ de mesure d'état obtenues par des mesures, en obtenant une différence d'écart au modèle, la différence d'écart au modèle étant envoyée à l'unité (21) d'observation du côté de l'entrée et la modélisation de l'onduleur (1) étant effectuée de manière à rendre la différence d'écart au modèle aussi petite que possible.

2. Procédé suivant la revendication 1,
   **caractérisé en ce que**
   les valeurs réelles d'état sont des valeurs $\hat{\underline{x}}(k)$ réelles de courant et les valeurs de consigne d'état des valeurs $\underline{x}_{Soll}(k)$ de consigne de courant.

3. Procédé suivant l'une des revendications précédentes,
   **caractérisé en ce que**
   l'on envoie la différence d'écart au modèle à l'unité (21) d'observation par une unité (25) de retour, qui amplifie les différences d'écart au modèle.

4. Procédé suivant l'une des revendications précédentes,
   **caractérisé en ce que**
   la prise en compte d'effets de retard comprend la prise en compte de retards de mesure, qui se créent lors de la détection numérique des grandeurs d'état de l'onduleur (1), et la prise en compte d'états de réglage, qui sont provoqués par l'électronique (19) de commande.

5. Procédé suivant l'une des revendications précédentes,
   **caractérisé en ce que**
   on modélise l'onduleur à l'aide d'un modèle d'espace d'état suivant

$$\hat{\underline{x}}'_{k+1} = \underline{\Phi}\hat{\underline{x}}'_k + \underline{\Gamma}\underline{u}_k$$

$$\hat{\underline{y}}_d = \underline{H}\hat{\underline{x}}'_k$$

dans lesquelles $\hat{\underline{x}}'_{(k)}$ correspond à un vecteur d'état de l'onduleur incluant des états retardés, $\underline{u}_k$ à un vecteur des tensions de réglage, $\underline{\Phi}, \underline{\Gamma}$ et $\underline{H}$ à des matrices de modèle et $\hat{\underline{y}}_d$ à un vecteur de valeurs de mesure de modèle d'état entachées de retard.

6. Procédé suivant l'une des revendications précédentes,
   **caractérisé en ce que**
   l'onduleur (1) est un onduleur à niveau multiple, qui a des branches (2) de soupape à semi-conducteur de puissance reliées entre elles en un circuit en pont, chaque branche (2) de soupape à semi-conducteur de puissance étant constituée d'un circuit série de sous-modules (8) bipolaire et chaque sous-module (8) comprend un montage (9) de semi-conducteur de puissance, ainsi qu'une unité (10) de condensateur montée en parallèle à celui-ci.

FIG 1

FIG 2

## FIG 3

## FIG 4

## FIG 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* WO 2008067784 A1

**In der Beschreibung aufgeführte Nicht-Patentliteratur**

* Robust High Bandwidth Discrete-Time Predictive Current Control with Predictice Internal Model-A Unified Approach for Voltage-Source PWM Converters. **YASSER ABDEL-RADY IBRAHIM MOHAMED et al.** IEEE Transactions on Power Electronics. IEEE Service Center, 01. Januar 2008, vol. 23, 126-136

* Predictive Current Control Using Identification of Current Ripple. **JÖRG WEIGOLD et al.** IEEE Transactions on Industrial Electronics. IEEE Service Center, 01. Dezember 2008, vol. 55, 4346-4353